# FASCICULE DE BREVET EUROPEEN

(11) **EP 0 911 515 B1**
(45) Date de publication et mention de la délivrance du brevet: **14.08.2002**
(21) Numéro de dépôt: 98402549.4
(22) Date de dépôt: 14.10.1998
(51) Int. Cl.: F02N 11/08, F02C 7/275

(54) **Dispositif de démarrage pour turbine à gaz dans un aéronef**
Anlassvorrichtung für eine Gasturbine in einem Flugzeug
Starter device for a gas turbine in an aircraft

(30) Priorité: 20.10.1997 FR 9713107
(43) Date de publication de la demande: 28.04.1999
(73) Titulaire: AIRBUS FRANCE, 31060 Toulouse (FR); ARTUS, 49240 Avrille (FR)
(72) Inventeur: Boyer, Serge, 31450 Deyme (FR); Sutra-Orus, Régine, 31170 Tournefeuille (FR); Tregine-Regent, Stéphane, 31700 Cornebarrieu (FR); Tardy, Alain, 75002 Paris (FR); Barbier, Claude, 49000 Angers (FR); Buron, Philippe, 49320 St. Laurent de la Plaine (FR); Ribardiere, Patrick, 49290 St. Laurent de la Plaine (FR); Louarn, Marcel, 49220 Vern D'anjou (FR)
(74) Mandataire: Rinuy, Santarelli

(56) Documents cités:
- US-A- 5 172 543
- US-A- 5 175 439
- US-A- 5 493 201

## Description

La présente invention concerne d'une manière générale les dispositifs de démarrage mis en oeuvre dans les aéronefs pour le démarrage d'une turbine à gaz.

Elle vise plus particulièrement le cas où la turbine à démarrer est destinée notamment à servir de générateur auxiliaire de puissance électrique, en étant alors communément désignée par le sigle APU.

Plus particulièrement, encore, la présente invention vise le cas où, pour un APU d'aéronef, cette turbine est une turbine de forte puissance.

Le plus souvent, à ce jour, la turbine à démarrer est disposée dans la partie arrière de l'aéronef, et, plus précisément, dans la queue de celui-ci.

Sa séquence de démarrage implique qu'elle soit entraînée mécaniquement jusqu'à ce que sa vitesse ait atteint une valeur sensiblement égale à 50 % de sa valeur nominale en fonctionnement normal.

Dès que cette vitesse a ensuite atteint 95 % de sa valeur nominale, la turbine est couplée à un générateur synchrone, qui, dûment piloté en conséquence, fonctionne alors en alternateur et développe la puissance électrique nécessaire à l'alimentation des équipements de bord de l'aéronef.

Deux technologies différentes sont à ce jour couramment mises en oeuvre pour le démarrage d'une telle turbine à gaz.

Selon la première, et la plus ancienne, de ces technologies de démarrage, le dispositif de démarrage comporte un moteur électrique d'entraînement indépendant, dont l'arbre de sortie est susceptible d'être mécaniquement couplé à l'arbre d'entrée de la turbine à démarrer, et alimenté en courant continu par les batteries d'accumulateurs que l'aéronef comporte à son bord.

Par moteur électrique d'entraînement "indépendant", on entend ici un moteur électrique distinct de l'alternateur qui est couplé à la turbine.

En pratique, les batteries d'accumulateurs mises en oeuvre pour l'alimentation de ce moteur électrique d'entraînement indépendant sont le plus souvent disposées à la partie avant de l'aéronef, dans sa soute.

Or, pour le démarrage d'une turbine de forte puissance, le couple de démarrage à foumir et la puissance de démarrage correspondante sont nécessairement très importants.

Dans ces conditions, le courant de démarrage à fournir au moteur peut lui-même atteindre des valeurs très élevées, qui sont fréquemment supérieures à 1000 A, et qui sont difficiles à contrôler.

Ne fût-ce qu'en raison de la dissipation thermique dans les conducteurs électriques reliant les batteries d'accumulateurs au moteur, il est impossible, dans ces conditions, d'utiliser les batteries d'accumulateurs présentes à la partie avant de l'aéronef.

Il est au contraire nécessaire de prévoir, à l'arrière de celui-ci, au plus près du moteur à alimenter, des batteries d'accumulateurs exclusivement réservées à cet effet.

Il en résulte, intempestivement, une augmentation non négligeable de la masse de l'ensemble, de l'ordre de 50 kg.

Suivant la deuxième technologie de démarrage connue, communément dite de l'alternateur-démarreur, qui a actuellement tendance à prévaloir parce qu'elle est normalement susceptible de conduire à de meilleures performances, c'est directement le générateur synchrone couplé à la turbine qui, dûment piloté à cet effet en moteur, fournit à cette turbine la puissance mécanique nécessaire à son démarrage.

En raison, notamment, de la suppression ainsi faite d'un moteur d'entraînement indépendant pour ce démarrage, aussi bien que de la suppression des conducteurs électriques nécessaires à la desserte de celui-ci, il en résulte, avantageusement, de ce point de vue, une limitation de la masse et des dimensions de l'ensemble.

Mais, par ailleurs, le générateur synchrone, étudié spécialement pour fonctionner normalement en mode alternateur, ne dispose pas, par lui-même, en mode moteur, de bonnes performances.

En particulier, sa constante de couple est faible.

Pour le démarrage d'une turbine de forte puissance, qui impose que soit fourni à son induit un courant important, il est donc nécessaire de piloter ce générateur synchrone par un convertisseur complexe et lourd, et de prévoir un deuxième convertisseur pour son pilotage en mode moteur, ce qui, en retour, pénalise inévitablement la masse de l'ensemble.

Pour des valeurs élevées du courant de démarrage à fournir, ces convertisseurs peuvent d'ailleurs atteindre une masse, et des dimensions, prohibitives pour un aéronef.

Enfin, les turbines de forte puissance actuellement développées ont fréquemment deux arbres distincts, l'un utilisé pour leur démarrage, l'autre utilisé pour l'entraînement du générateur synchrone, et ces deux arbres sont couplés thermodynamiquement l'un à l'autre de façon non réversible, en sorte qu'il n'est pas possible d'utiliser en mode moteur le générateur synchrone.

La présente invention a pour objet un dispositif de démarrage pour turbine à gaz dans un aéronef, qui, tout en convenant au démarrage d'une turbine de forte puissance sans induire de contrainte sur les autres équipements de bord de l'aéronef, permet d'éviter les inconvénients précédents et conduit en outre à d'autres avantages.

Ce dispositif de démarrage est du genre comportant des moyens d'alimentation en énergie électrique délivrant du courant continu, et un moteur électrique d'entraînement, qui, desservi par ces moyens d'alimentation, est indépendant de la turbine à démarrer, et dont l'arbre de sortie est susceptible d'être mécaniquement couplé en rotation à l'arbre d'entrée de cette turbine, et il est d'une manière générale caractérisé en ce que le moteur électrique d'entraînement est un moteur synchrone alimenté en courant alternatif triphasé, et piloté, par un onduleur raccordé aux moyens d'alimentation.

Lorsque les moyens d'alimentation mis en oeuvre comportent, comme source d'énergie, une ou plusieurs batteries d'accumulateurs, il est avantageusement possible de se satisfaire des batteries d'accumulateurs usuellement disponibles à la partie avant de l'aéronef.

Il suffit, en effet, suivant l'invention, de prévoir, au même endroit, un convertisseur de tension apte à élever la tension à une valeur suffisante pour que, à puissance égale, la dissipation thermique dans les conducteurs électriques intervenant alors inévitablement entre cette partie avant et la partie arrière où se situe la turbine à démarrer reste dans des limites acceptables.

Il en est de même si, en variante, les moyens d'alimentation électriques mis en oeuvre comportent, comme source d'énergie, le réseau alternatif triphasé usuellement présent à bord d'un aéronef.

Il suffit, en effet, suivant l'invention, si ce réseau alternatif triphasé de bord est utilisé, de le faire intervenir par l'intermédiaire d'un convertisseur de courant.

Dans l'un et l'autre cas, un gain de masse non négligeable est obtenu, et il n'est pas indifférent de souligner que, suivant l'invention, ce résultat est atteint de manière assez paradoxale en dissociant deux moyens, en l'espèce le moteur indépendant utilisé au démarrage et le générateur synchrone utilisé en fonctionnement, en revenant en cela à la technologie du moteur électrique d'entraînement indépendant, alors que, suivant la technologie de l'alternateur-démarreur, et suivant une opinion généralement admise dans le domaine aéronautique en cause, un gain de masse est le plus souvent obtenu par une intégration de divers moyens.

Quoi qu'il en soit, l'utilisation, au démarrage, d'un moteur d'entraînement indépendant permet, avantageusement, en service, d'utiliser au mieux de ses possibilités en tant qu'alternateur le générateur synchrone couplé à la turbine, sans que la conception de ce générateur synchrone doive prendre en compte un quelconque fonctionnement en mode moteur, et, ainsi, de limiter les risques de panne ou de dégradation de performances que pourrait entraîner un quelconque dysfonctionnement au démarrage avec un tel mode moteur lors de celui-ci.

Corollairement, le pilotage de ce moteur d'entraînement par un onduleur, qui est, préférentiellement, un pilotage vectoriel, permet avantageusement de contrôler au mieux le courant d'alimentation qui lui est fourni, et, donc, le couple qu'il délivre, et, par là, d'adapter au mieux l'ensemble aux paramètres de la turbine, au bénéfice d'une optimisation des conditionnements de fonctionnement de celle-ci et d'une fiabilisation de l'ensemble.

En particulier, la longévité de la turbine peut avantageusement s'en trouver accrue.

Suivant un développement de ces possibilités, il est d'ailleurs prévu, suivant l'invention, de contrôler le déphasage entre le courant d'alimentation fourni au moteur et la force électromotrice développée par celui-ci, en fonction du point de fonctionnement du moteur.

Ce contrôle du déphasage peut être indépendant du pilotage vectoriel, mais, associé à celui-ci, il permet avantageusement d'optimiser les performances du moteur.

Par ailleurs, l'onduleur, et, en particulier, la phase et/ou l'amplitude de son courant de sortie, et, par suite, le couple moteur fourni, peuvent être pilotés en fonction de paramètres instantanés relevés sur la turbine, tels que, par exemple, la température des gaz à sa sortie, et/ou en fonction de paramètres préprogrammés, tels que, par exemple, la phase de vol ou la température extérieure.

Il est ainsi avantageusement possible d'adapter encore de plus près aux nécessités du moment le couple fourni par le moteur.

Suivant, par ailleurs, une forme préférée de réalisation de l'invention, le convertisseur de tension prévu en aval des moyens d'alimentation en énergie électrique est formé d'une pluralité de modules de conversion élémentaires, ce qui permet notamment de réduire avantageusement les dimensions de l'ensemble tout en autorisant la puissance, élevée, à atteindre.

Suivant, également, une forme préférée de réalisation de l'invention, les divers modules de conversion ainsi mis en oeuvre, qui sont montés en parallèle par leurs entrées, sont montés en série par leurs sorties.

La réduction qui en résulte pour leur rapport individuel de conversion permet avantageusement de surmonter les difficultés techniques que pourrait autrement soulever leur réalisation.

Les caractéristiques et avantages de l'invention ressortiront d'ailleurs de la description qui va suivre, à titre d'exemple, en référence aux dessins schématiques annexés sur lesquels :
la figure 1 est un bloc diagramme d'un ensemble du dispositif de démarrage suivant l'invention ;
la figure 2 est un bloc diagramme plus détaillé d'une partie de ce dispositif de démarrage ;
la figure 3 est un bloc diagramme général du convertisseur de tension qu'il comporte ;
la figure 4 est un schéma plus détaillé d'un des modules de conversion formant ce convertisseur de tension, suivant l'encart IV de la figure 3;
la figure 5 est un bloc diagramme plus détaillé d'une autre partie du dispositif de démarrage suivant l'invention ;
les figures 6, 7 et 8 sont des diagrammes illustrant plusieurs possibilités d'intervention de ce dispositif de démarrage.

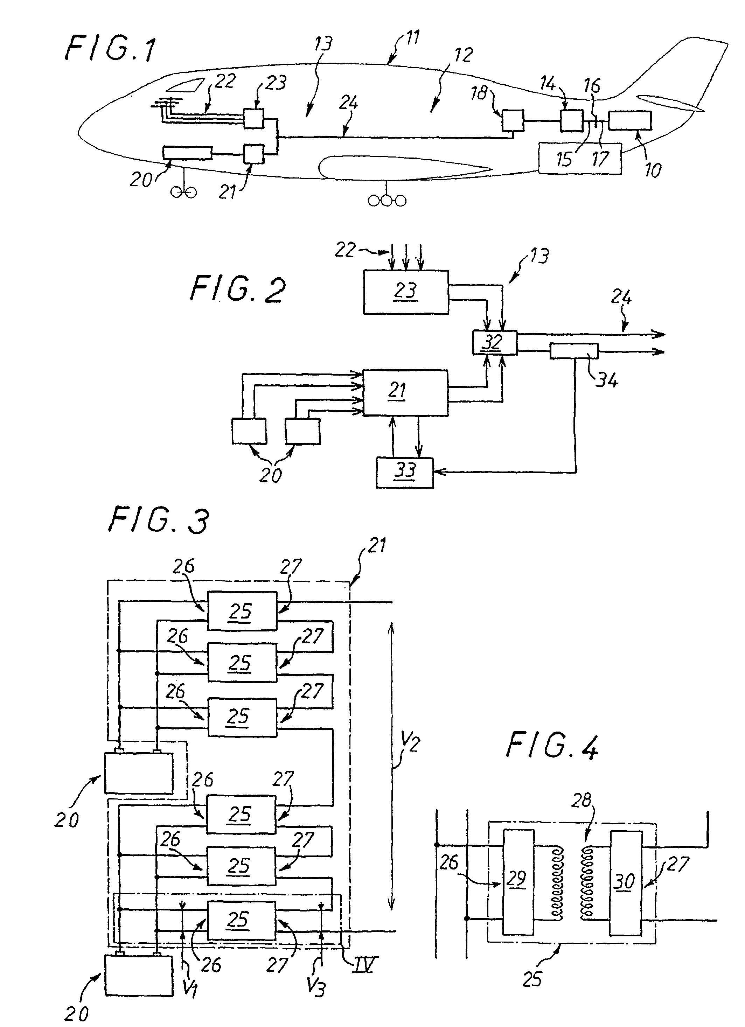

Tel qu'illustré sur la figure 1, il s'agit, globalement, d'assurer le démarrage d'une turbine 10, qui appartient à l'équipement interne d'un quelconque aéronef 11, et qui, en pratique, est une turbine à gaz.

Dans la forme de mise en oeuvre représentée, cette turbine 10 est disposée dans la partie arrière de l'aéronef 11, et, plus précisément, dans la queue de celui-ci.

De manière connue en soi, le dispositif de démarrage 12 qui lui est associé comporte, globalement, d'une part, suivant des modalités décrites plus en détail ultérieurement, des moyens d'alimentation en énergie électrique 13 délivrant du courant continu, et, d'autre part, un moteur électrique d'entraînement 14, qui, desservi par ces moyens d'alimentation 13, est indépendant de la turbine 10, et dont l'arbre de sortie 15 est susceptible d'être mécaniquement couplé en rotation, par exemple par l'intermédiaire d'un embrayage 16, à l'arbre d'entrée 17 de cette turbine 10.

Suivant l'invention, le moteur électrique d'entraînement 14, plus simplement désigné par le moteur dans ce qui suit, est un moteur synchrone alimenté en courant alternatif triphasé, et piloté, par un onduleur 18 raccordé aux moyens d'alimentation 13.

Ces moyens d'alimentation 13 comportent, notamment, comme source d'énergie, au moins une batterie d'accumulateurs 20, qui, suivant l'invention, est suivie d'un convertisseur de tension 21, de type communément dit "DC/DC", c'est-à-dire continu/continu.

Dans la forme de mise en oeuvre représentée, ils comportent, également, comme source d'énergie, en parallèle à la ou aux batteries d'accumulateurs 20, le réseau alternatif triphasé 22, à fréquence constante ou variable, que, de manière usuelle, l'aéronef 11 comporte à son bord, et, suivant des modalités décrites plus en détail ultérieurement, ce réseau alternatif triphasé de bord 22 intervient alors, suivant l'invention, par l'intermédiaire d'un convertisseur de courant 23, de type communément dit "AC/DC", c'est-à-dire alternatif/continu.

C'est, bien entendu, par simple commodité, pour les distinguer l'un de l'autre, que le convertisseur 21 est appelé ici convertisseur de tension et le convertisseur 23 convertisseur de courant, le convertisseur 21 assurant pour l'essentiel en courant continu une élévation de la tension et le convertisseur 23 une transformation d'un courant alternatif en un tel courant continu.

Mais il va de soi que, dans l'un et l'autre cas, tension et courant sont liés.

Dans la forme de mise en oeuvre représentée, la ou les batteries d'accumulateurs 20 sont disposées dans la partie avant de l'aéronef 11, et, plus précisément, dans la soute avant de celui-ci.

Il en est de même pour le convertisseur de tension 21 et pour le convertisseur de courant 23.

Par contre, le moteur électrique d'entraînement 14 est disposé dans la partie arrière de l'aéronef 11, et il en est de même de l'onduleur 18, celui-ci étant disposé au plus près de ce moteur électrique d'entraînement 14.

Le convertisseur de tension 21 et le convertisseur de courant 23 sont donc reliés, en commun, à l'onduleur 18 par des conducteurs électriques 24, qui, à la manière d'une barre bus, courent sur toute la longueur de l'aéronef 11.

Préférentiellement, pour limiter les contraintes sur les autres équipements de bord de l'aéronef 11, et, en tout cas, pour maintenir ces contraintes dans les limites acceptables en la matière, deux batteries d'accumulateurs 20 sont prévues, tel que représenté sur les figures 2 et 3.

La tension V1 à leur borne est par exemple de l'ordre de 28 V.

Il s'agit donc d'une tension qui, dans le domaine aéronautique en cause, est considérée comme une basse tension.

Partant de cette basse tension V1, qui est de toute façon toujours inférieure à 80 V, le convertisseur de tension 21 délivre, suivant l'invention, une tension V2 qui, dans le domaine aéronautique, est considérée comme relevant des hautes tensions, cette haute tension V2 étant globalement comprise entre 400 V et 600 V, en étant par exemple de l'ordre de 500 V, sous une intensité de l'ordre de 25 A.

Grâce à l'usage ainsi fait d'une haute tension, les pertes en ligne par dissipation thermique dans les conducteurs électriques 24 et/ou la masse de ceux-ci peuvent avantageusement être minimisées.

La haute tension mise en oeuvre permet également d'utiliser, pour le moteur électrique d'entraînement 14, un moteur à constante de couple importante, et, donc, pour l'onduleur 18, un onduleur à faible courant, avec une optimisation des interrupteurs de puissance qu'il comporte.

La masse de cet onduleur 18 peut ainsi être elle-même avantageusement réduite.

Suivant l'invention, et tel que schématisé sur la figure 3, le convertisseur de tension 21 est préférentiellement formé d'une pluralité de modules de conversion 25 élémentaires, qui, par leurs entrées 26, sont montés en parallèle, et qui, par leurs sorties 27, sont montés en série.

Ainsi, le rapport individuel de conversion de chacun de ces modules de conversion 25 peut être avantageusement réduit, ce qui facilite leur réalisation.

Par exemple, et tel que représenté, six modules de conversion 25 sont ainsi mis en oeuvre, qui délivrent chacun une tension continue V3 de l'ordre de 80V, pour un rapport individuel de conversion qui est donc avantageusement faible.

Les modules de conversion 25, qui sont tous identiques, délivrent chacun une puissance de l'ordre de 2 kW.

Préférentiellement, ils sont répartis en groupes, et il y a une batterie d'accumulateurs 20 par groupe.

Plus précisément, lorsque, comme en l'espèce, deux batteries d'accumulateurs 20 sont prévues, il y a deux groupes de modules de conversion 25, à raison d'un par batterie d'accumulateurs 20, et chacun de ces groupes comporte trois modules de conversion 25.

Préférentiellement, et ainsi qu'il est visible pour l'un d'eux sur la figure 4, chacun des modules de conversion 25 met en oeuvre un transformateur 28, qui a à charge d'assurer de manière pratique le rapport individuel de conversion recherché.

Chacun des modules de conversion 25 comporte donc, en amont de ce transformateur 28, un convertisseur 29, de type "DC/AC", qui transforme un courant continu en courant alternatif, et, en aval du transformateur 28, un convertisseur 30, de type "AC/DC", qui transforme un courant alternatif en un courant continu.

Outre la réalisation pratique de l'élévation de tension recherchée, le transformateur 28 assure avantageusement une isolation galvanique entre les entrées 26 des modules de conversion 25 et leurs sorties 27.

Pour limiter, au mieux, la masse individuelle de chacun des modules de conversion 25, aussi bien que pour minimiser les pertes, la fréquence de travail du transformateur 28 est, de préférence, élevée.

En pratique, elle est comprise entre 25 kHz et 100 kHz, en étant préférentiellement de l'ordre de 40 kHz.

Suivant une technologie connue par elle-même, le transformateur 28 des modules de conversion 25 est, préférentiellement, de type "planar".

Autrement dit, il s'agit, préférentiellement, d'un transformateur plat, constitué de conducteurs plats, sous forme de plaques de cuivre ou de circuits imprimés, entourés de ferrite.

L'inductance de fuite, la masse et l'encombrement d'un tel transformateur sont avantageusement faibles.

De manière également connue, chacun des modules de conversion 25 met en oeuvre des interrupteurs de puissance.

Préférentiellement, ces interrupteurs de puissance sont de type MOSFET, car ils conviennent bien aux hautes fréquences et aux basses tensions.

De manière usuelle, également, il est associé, au convertisseur de tension 21 formé de ces divers modules de conversion 25, d'une part, un filtre d'entrée, qui n'est pas représenté sur les figures, et, d'autre part, un filtre de sortie 32, qui est schématisé à la figure 2, et qui, en pratique, intervient en amont des conducteurs électriques 24.

Préférentiellement, et tel que schématisé sur la figure 2, ce convertisseur de tension 21 est par ailleurs soumis à un module de contrôle 33 sensible au courant.

Par exemple, et tel que représenté sur la figure 2, il est possible, pour ce faire, de disposer un capteur 34 aux bornes de l'inductance de sortie, en série avec l'un des conducteurs électriques 24.

Mais, préférentiellement, pour des questions de facilité de mise en oeuvre, le module de contrôle 33 est sensible à la valeur de crête du courant circulant dans le secondaire du transformateur 28 d'un module de conversion 25.

Suivant une technologique connue par elle-même, le convertisseur de courant 23 par l'intermédiaire duquel est susceptible d'intervenir le réseau alternatif triphasé de bord 22 est préférentiellement formé par un transformateur suivi par deux ponts de diodes, non représentés sur les figures.

Préférentiellement, également, et tel que représenté sur la figure 2, le filtre de sortie 32 associé au convertisseur de tension 21 est également associé au convertisseur de courant 23, en amont des conducteurs électriques 24.

L'onduleur 18 mis en oeuvre suivant l'invention est, en pratique, quant à lui, un onduleur haute tension triphasé à commutation forcée.

Il est constitué de composants de puissance standard, utilisés au maximum de leur capacité.

Parmi ces composants, figurent, d'une manière usuelle, des interrupteurs de puissance.

Préférentiellement, ces interrupteurs de puissance sont de type IGBT, avec diode de roue libre rapide, ceux-ci présentant un calibre en tension/courant avantageusement important.

Comme l'onduleur 18, le moteur électrique d'entraînement 14 est formé d'éléments standard utilisés au maximum de leur capacité.

Il s'agit, en pratique, d'un moteur synchrone à aimant permanent.

Plus précisément, il s'agit d'un moteur à aimant permanent samarium cobalt collé et fretté au carbone à trois paires de pôles et à bobinage statorique câblé en étoile.

L'utilisation ainsi faite d'un moteur synchrone au lieu d'un moteur à courant continu permet avantageusement d'en réduire la masse, et, par absence de balai, elle augmente la fiabilité de l'ensemble.

Eu égard à son alimentation à haute tension, la masse des moyens de câblage qui s'y rapportent est également avantageusement réduite.

En pratique, les conditions étant égales par ailleurs, la masse du moteur électrique d'entraînement 14 est réduite de plus de la moitié par rapport à celle d'un moteur à courant continu, et celle des moyens de câblage est, elle, près de vingt fois inférieure.

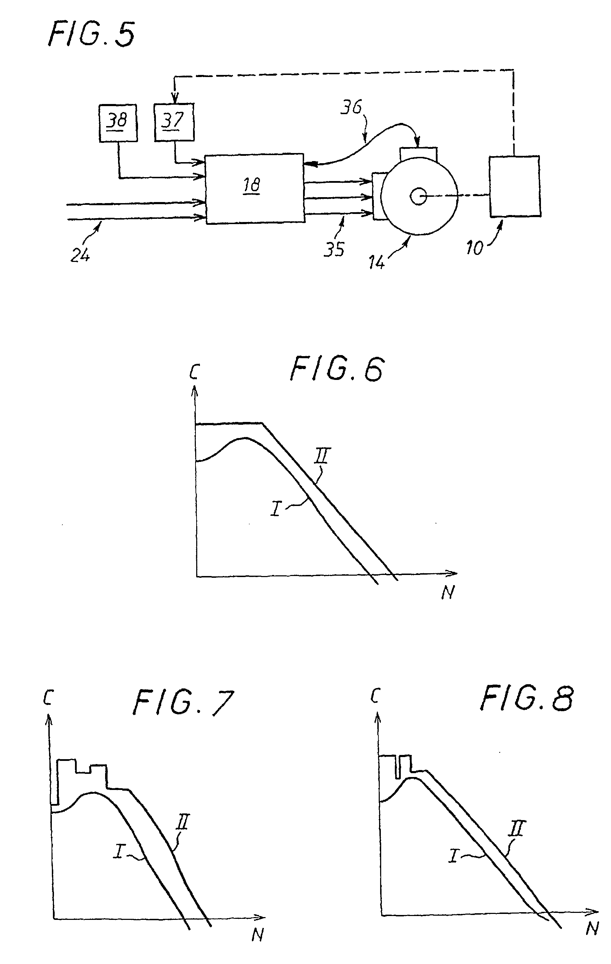

Globalement, et tel que schématisé en 35 sur la figure 5, l'onduleur 18 a à charge de fournir au moteur électrique d'entraînement 14 la tension alternative triphasée nécessaire à l'alimentation de celui-ci pendant la phase de démarrage de la turbine 10, en lui délivrant notamment un courant suffisant pour qu'il puisse répondre au couple requis, et il est donc dimensionné en conséquence.

L'onduleur 18 délivre, ainsi, suivant l'invention, au moteur électrique d'entraînement 14, une puissance de l'ordre de 20 kVA, sous une tension de crête maximale prise entre phase et neutre de l'ordre de 260 V.

Conjointement, et tel que schématisé en 36 sur la figure 5, l'onduleur 18 assure aussi le pilotage du moteur électrique d'entraînement 14.

Préférentiellement, l'onduleur 18 est lui-même piloté suivant la technique du pilotage vectoriel.

Cette technique étant bien connue par elle-même, elle ne sera pas décrite ici.

Préférentiellement, également, le dispositif de démarrage 12, suivant l'invention, assure, indépendamment de ce pilotage vectoriel ou en association avec celui-ci, un contrôle du déphasage entre le courant fourni par l'onduleur 18 au moteur électrique d'entraînement 14 et la force électromotrice développée par ce dernier.

En pratique, ce contrôle de déphasage se fait en fonction du point de fonctionnement du moteur électrique d'entraînement 14, tel que résultant, par exemple, de ses caractéristiques de couple et/ou de vitesse instantanées.

Le contrôle de déphasage ainsi pratiqué permet avantageusement, sans augmenter la tension, et, donc, pour une tension donnée, une montée en vitesse supérieure, en extrapolant ainsi les possibilités offertes normalement par la tension.

Par exemple, et tel que schématisé en 37 sur la figure 5, l'onduleur 18 et, plus précisément, la phase et/ou l'amplitude de son courant de sortie, et, donc, le couple moteur fourni, sont pilotés en fonction de paramètres relevés directement sur la turbine 10, et, notamment, en fonction de la température des gaz à la sortie de celle-ci.

En variante, et/ou en complément, et tel que schématisé en 38 sur la figure 5, l'onduleur 18 est piloté en fonction de paramètres préprogrammés, et, par exemple, en fonction de la phase de vol ou de la température.

La souplesse d'intervention ainsi apportée avantageusement par l'onduleur 18 mis en oeuvre suivant l'invention apparaîtra mieux si l'on se reporte aux diagrammes des figures 6 à 8.

Sur ces diagrammes ont été représentés, en abscisses, la vitesse de rotation N, et, en ordonnées, le couple C.

La courbe I représente, à chaque fois, le couple résistant de la turbine 10, et la courbe II le couple moteur du moteur électrique d'entraînement 14, la différence représentant le couple d'accélération correspondant.

Normalement, le couple résistant de la turbine 10 variant relativement peu au début de la montée en vitesse, le couple moteur correspondant du moteur électrique d'entraînement 14 peut être sensiblement constant, figure 6.

Mais, suivant l'invention, il peut également être plus ou moins modulé suivant les nécessités, figures 7 et 8.

Le pilotage vectoriel de l'onduleur 18 permet de commuter cet onduleur 18 à une fréquence de découpage nettement plus faible, et, par exemple, de l'ordre de 20 kHz, que celle à mettre en oeuvre suivant la technologie plus usuelle de modulation de la largeur des impulsions.

Il conduit donc, pour une fréquence de découpage donnée, à une meilleure qualité pour la forme des ondes, ce qui facilite le traitement de celles-ci et leur compatibilité avec l'ensemble des équipements concernés, et ce qui permet également d'obtenir une bande passante plus large, et, donc, d'augmenter la plage de vitesse de fonctionnement du moteur électrique d'entraînement 14.

En outre, à qualité de forme d'onde égale, les pertes et les contraintes sur les interrupteurs de puissance sont avantageusement réduites.

Enfin, il convient avantageusement bien au contrôle concomitant du déphasage entre le courant fourni au moteur électrique d'entraînement 14 et la force électromotrice développée par celui-ci.

Associé à ce pilotage vectoriel de l'onduleur 18, ce contrôle de déphasage permet, quant à lui, d'optimiser les performances du moteur électrique d'entraînement 14, et, donc, d'en diminuer le calibre, ou, à calibre égal, d'en augmenter la plage d'utilisation en tension/vitesse.

Globalement, l'ensemble que constituent, suivant l'invention, le moteur électrique d'entraînement 14 et l'onduleur 18 est avantageusement assimilable à moteur synchrone autopiloté, dans la mesure, où, en fonction de la position du rotor du moteur électrique d'entraînement 14, l'onduleur 18 agit ensuite sur cette position par le courant qu'il fournit à celui-ci.

Autrement dit, dans le dispositif de démarrage 12 suivant l'invention, la tension de pilotage du moteur électrique d'entraînement 14 assurant le démarrage de la turbine 10 dépend avantageusement de son point de fonctionnement.

Par ailleurs, la possibilité de faire appel au réseau alternatif triphasé de bord 22 de l'aéronef 11 lui-même permet, avantageusement, lorsque ce réseau alternatif triphasé de bord 22 est en fonctionnement, d'économiser, si désiré, les batteries d'accumulateurs 20.

Bien entendu, la présente invention ne se limite pas à la forme de mise en oeuvre décrite et représentée, mais englobe toute variante d'exécution.

En particulier, les moyens d'alimentation en énergie électrique peuvent comporter, en substitution aux batteries d'accumulateurs, ou conjointement avec celles-ci, le réseau continu de bord, c'est-à-dire le réseau, en général de 28 V, qui, destiné à alimenter divers équipements, et, notamment, les commandes, est obtenu à partir du réseau alternatif triphasé, ou, en cas de nécessité, des batteries d'accumulateurs elles-mêmes.

En outre, au lieu d'être forcée, la commutation de l'onduleur peut être douce.

## Revendications

1. Dispositif de démarrage pour turbine à gaz disposée dans un aéronef, du genre comportant des moyens d'alimentation en énergie électrique (13) délivrant du courant continu, et un moteur électrique d'entraînement (14), qui, desservi par ces moyens d'alimentation (13), est indépendant de la turbine (10) à démarrer, et dont l'arbre de sortie (15) est susceptible d'être mécaniquement couplé en rotation à l'arbre d'entrée (17) de cette turbine (10), **caractérisé en ce que** le moteur électrique d'entraînement (14) est un moteur synchrone alimenté en courant alternatif triphasé, et piloté, par un onduleur (18) raccordé aux moyens d'alimentation (13).

2. Dispositif de démarrage suivant la revendication 1, **caractérisé en ce que** les moyens d'alimentation (13) comportent, comme source d'énergie, au moins une batterie d'accumulateurs (20) suivie d'un convertisseur de tension (21).

3. Dispositif de démarrage suivant la revendication 2, **caractérisé en ce que** le convertisseur de tension (21) est formé d'une pluralité de modules de conversion (25), qui, par leurs entrées (26), sont montés en parallèle, et qui, par leurs sorties (27), sont montés en série.

4. Dispositif de démarrage suivant la revendication 3, **caractérisé en ce que** chacun des modules de conversion (25) met en oeuvre un transformateur (28) dont la fréquence de travail est comprise entre 25 kHz et 100 kHz.

5. Dispositif de démarrage suivant la revendication 4, **caractérisé en ce que** le transformateur (28) des modules de conversion (25) est de type "planar".

6. Dispositif de démarrage suivant l'une quelconque des revendications 3 à 5, **caractérisé en ce que** chacun des modules de conversion (25) met en oeuvre des interrupteurs de puissance de type MOSFET.

7. Dispositif de démarrage suivant l'une quelconque des revendications 3 à 6, **caractérisé en ce que** les modules de conversion (25) sont répartis en groupes, et il y a une batterie d'accumulateurs (20) par groupe.

8. Dispositif de démarrage suivant l'une quelconque des revendications 2 à 6, **caractérisé en ce que**, partant d'une basse tension (V1) inférieure à 80 V, le convertisseur de tension (21) délivre une haute tension (V2) comprise entre 400 V et 600 V.

9. Dispositif de démarrage suivant l'une quelconque des revendications 2 à 8, **caractérisé en ce qu'**il est associé, au convertisseur de tension (21), un filtre de sortie (32).

10. Dispositif de démarrage suivant l'une quelconque des revendications 2 à 8, **caractérisé en ce que** le convertisseur de tension (21) est soumis à un module de contrôle (33) sensible au courant.

11. Dispositif de démarrage suivant les revendications 4 et 10, prises conjointement, **caractérisé en ce que** le module de contrôle (33) est sensible à la valeur de crête du courant circulant dans le secondaire du transformateur (28) d'un module de conversion (25).

12. Dispositif de démarrage suivant l'une quelconque des revendications 2 à 10, **caractérisé en ce que** la ou les batteries d'accumulateurs (20) et le convertisseur de tension (21) correspondant sont disposés dans la partie avant de l'aéronef (11).

13. Dispositif de démarrage suivant l'une quelconque des revendications 2 à 12, **caractérisé en ce que** les moyens d'alimentation (13) comportent, comme source d'énergie, en substitution aux batteries d'accumulateurs (20), ou conjointement avec celles-ci, le réseau continu de bord.

14. Dispositif de démarrage suivant la revendication 1, **caractérisé en ce que** les moyens d'alimentation (13) comportent, comme source d'énergie, le réseau alternatif triphasé de bord (22), et celui-ci intervient par l'intermédiaire d'un convertisseur de courant (23).

15. Dispositif de démarrage suivant les revendications 9 et 14, prises conjointement, **caractérisé en ce que** le filtre de sortie (32) associé au convertisseur de tension (21) est également associé au convertisseur de courant (23).

16. Dispositif de démarrage suivant l'une quelconque des revendications 14, 15, **caractérisé en ce que** le convertisseur de courant (23) est disposé dans la partie avant de l'aéronef (11).

17. Dispositif de démarrage suivant l'une quelconque des revendications 1 à 16, **caractérisé en ce que** l'onduleur (18) est un onduleur haute tension triphasé.

18. Dispositif de démarrage suivant la revendication 17, **caractérisé en ce que** l'onduleur (18) est à commutation forcée.

19. Dispositif de démarrage suivant l'une quelconque des revendications 1 à 18, **caractérisé en ce que** l'onduleur (18) délivre une puissance de l'ordre de 20 kVA.

20. Dispositif de démarrage suivant l'une quelconque des revendications 1 à 19, **caractérisé en ce que** l'onduleur (18) met en oeuvre des interrupteurs de puissance de type IGBT.

21. Dispositif de démarrage suivant l'une quelconque des revendications 1 à 19, **caractérisé en ce que** l'onduleur (18) est piloté suivant la technique du pilotage vectoriel.

22. Dispositif de démarrage suivant l'une quelconque des revendications 1 à 21, **caractérisé en ce qu'**il assure un contrôle du déphasage entre le courant fourni par l'onduleur (18) au moteur électrique d'entraînement (14) et la force électromotrice développée par ce dernier.

23. Dispositif de démarrage suivant la revendication 22, **caractérisé en ce que** le contrôle du déphasage entre le courant fourni par l'onduleur (18) au moteur électrique d'entraînement (14) et la force électromotrice développée par ce dernier se fait en fonction du point de fonctionnement du moteur électrique d'entraînement (14).

24. Dispositif de démarrage suivant l'une quelconque des revendications 1 à 23, **caractérisé en ce que** l'onduleur (18) est piloté en fonction de paramètres relevés sur la turbine (10).

25. Dispositif de démarrage suivant l'une quelconque des revendications 1 à 24, **caractérisé en ce que** l'onduleur (18) est piloté en fonction de paramètres préprogrammés.

26. Dispositif de démarrage suivant l'une quelconque des revendications 1 à 25, **caractérisé en ce que** le moteur électrique d'entraînement (14) est un moteur synchrone à aimant permanent.

27. Dispositif de démarrage suivant l'une quelconque des revendications 1 à 26, **caractérisé en ce que** la turbine (10), le moteur électrique d'entraînement (14) et l'onduleur (18) sont disposés à la partie arrière de l'aéronef (11).

## Patentansprüche

1. Anlassvorrichtung für eine in einem Luftfahrzeug angeordnete Gasturbine, umfassend Mittel (13) zur Versorgung mit elektrischer Energie, die Gleichstrom liefern, und einen elektrischen Antriebsmotor (14), der durch diese Versorgungsmittel (13) versorgt wird und von der anzulassenden Turbine (10) unabhängig ist und dessen Austrittswelle (15) bezüglich Drehung mechanisch mit der Eintrittswelle (17) dieser Turbine (10) gekuppelt werden kann, **dadurch gekennzeichnet, dass** der elektrische Antriebsmotor (14) ein mit dreiphasigem Wechselstrom versorgter Synchronmotor ist und durch einen mit den Versorgungsmitteln (13) verbundenen Wechselrichter (18) gesteuert wird.

2. Anlassvorrichtung nach Anspruch 1, **dadurch gekennzeichnet, dass** die Versorgungsmittel (13) als Energiequelle mindestens eine Akkumulatorenbatterie (20) aufweisen, auf die ein Spannungswandler (21) folgt.

3. Anlassvorrichtung nach Annspruch 2, **dadurch gekennzeichnet, dass** der Spannungswandler (21) aus einer Vielzahl von Umwandlungsmodulen (25) gebildet ist, die mit ihren Eingängen (26) parallel geschaltet sind und die mit ihren Ausgängen (27) in Reihe geschaltet sind.

4. Anlassvorrichtung nach Anspruch 3, **dadurch gekennzeichnet, dass** jedes der Umwandlungsmodule (25) einen Transformator (28) aufweist, dessen Arbeitsfrequenz zwischen 25 kHz und 100 kHz liegt.

5. Anlassvorrichtung nach Anspruch 4, **dadurch gekennzeichnet, dass** der Transformator (28) der Umwandlungmodule (25) vom "planaren" Typ ist.

6. Anlassvorrichtung nach einem der Ansprüche 3 bis 5, **dadurch gekennzeichnet, dass** jedes der Umwandlungsmodule (25) Leistungsschalter vom Typ MOSFET aufweist.

7. Anlassvorrichtung nach einem der Ansprüche 3 bis 6, **dadurch gekennzeichnet, dass** die Umwandlungsmodule (25) in Gruppen verteilt sind und eine Akkumulatorenbatterie (20) pro Gruppe vorgesehen ist.

8. Anlassvorrichtung nach einem der Ansprüche 2 bis 6, **dadurch gekennzeichnet, dass** der Spannungswandler (21), ausgehend von einer Niederspannung (V1) unter 80 V, eine Hochspannung (V2) zwischen 400 V und 600 V liefert.

9. Anlassvorrichtung nach einem der Ansprüche 2 bis 8, **dadurch gekennzeichnet, dass** dem Spannungswandler (21) ein Ausgangsfilter (32) zugeordnet ist.

10. Anlassvorrichtung nach einem der Ansprüche 2 bis 8, **dadurch gekennzeichnet, dass** der Spannungswandler (21) einem gegenüber dem Strom empfindlichen Steuermodul (33) ausgesetzt ist.

11. Anlassvorrichtung nach den Ansprüche 4 und 10 zusammen, **dadurch gekennzeichnet, dass** das Steuermodul (33) für den Spitzenwert des in der Sekundärseite des Transformators (28) eines Umwandlungsmoduls (25) fließenden Stroms empfindlich ist.

12. Anlassvorrichtung nach einem der Ansprüche 2 bis 10, **dadurch gekennzeichnet, dass** die Akkumulatorenbatterie/n (20) und der entsprechende Spannungswandler (21) im vorderen Teil des Luftfahrzeugs (11) angeordnet sind.

13. Anlassvorrichtung nach einem der Ansprüche 2 bis 12, **dadurch gekennzeichnet, dass** die Versorgungsmittel (13) als Energiequelle anstelle der Akkumulatorenbatterien (20) oder gleichzeitig mit diesen das Bord-Gleichstromnetz aufweisen.

14. Anlassvorrichtung nach Anspruch 1, **dadurch gekennzeichnet, dass** die Versorgungsmittel (13) als Energiequelle das dreiphasige Bord-Wechselstromnetz (22) aufweisen und dieses über einen Stromwandler (23) angeschlossen ist.

15. Anlassvorrichtung nach den Ansprüche 9 und 14 zusammen, **dadurch gekennzeichnet, dass** der dem Spannungswandler (21) zugeordnete Ausgangsfilter (32) auch dem Stromwandler (23) zugeordnet ist.

16. Anlassvorrichtung nach einem der Ansprüche 14, 15, **dadurch gekennzeichnet, dass** der Stromwandler (23) im vorderen Teil des Luftfahrzeugs (11) angeordnet ist.

17. Anlassvorrichtung nach einem der Ansprüche 1 bis 16, **dadurch gekennzeichnet, dass** der Wechselrichter (18) ein dreiphasiger Hochspannungs-Wechselrichter ist.

18. Anlassvorrichtung nach Anspruch 17, **dadurch gekennzeichnet, dass** der Wechselrichter (18) mit Zwangsumschaltung ist.

19. Anlassvorrichtung nach einem der Ansprüche 1 bis 18, **dadurch gekennzeichnet, dass** der Wechselrichter (18) eine Leistung von etwa 20 kVA liefert.

20. Anlassvorrichtung nach einem der Ansprüche 1 bis 19, **dadurch gekennzeichnet, dass** der Wechselrichter (18) Leistungsschalter vom Typ IGBT aufweist.

21. Anlassvorrichtung nach einem der Ansprüche 1 bis 19, **dadurch gekennzeichnet, dass** der Wechselrichter (18) nach der Technik der vektoriellen Steuerung gesteuert wird.

22. Anlassvorrichtung nach einem der Ansprüche 1 bis 21, **dadurch gekennzeichnet, dass** er eine Steuerung der Phasenverschiebung zwischen dem von dem Wechselrichter (18) dem elektrischen Antriebsmotor (14) gelieferten Strom und der von diesem entwickelten elektromotorischen Kraft gewährleistet.

23. Anlassvorrichtung nach Anspruch 22, **dadurch gekennzeichnet, dass** die Steuerung der Phasenverschiebung zwischen dem vom Wechselrichter (18) dem elektrischen Antriebsmotor (14) gelieferten Strom und der von diesem entwickelten elektromotorischen Kraft in Abhängigkeit von dem Betriebspunkt des elektrischen Antriebsmotors (14) stattfindet.

24. Anlassvorrichtung nach einem der Ansprüche 1 bis 23, **dadurch gekennzeichnet, dass** der Wechselrichter (18) in Abhängigkeit von an der Turbine (10) abgenommenen Parametern gesteuert wird.

25. Anlassvorrichtung nach einem der Ansprüche 1 bis 24, **dadurch gekennzeichnet, dass** der Wechselrichter (18) in Abhängigkeit von vorprogrammierten Parametern gesteuert wird.

26. Anlassvorrichtung nach einem der Ansprüche 1 bis 25, **dadurch gekennzeichnet, dass** der elektrische Antriebsmotor (14) ein Synchronmotor mit Permanentmagnet ist.

27. Anlassvorrichtung nach einem der Ansprüche 1 bis 26, **dadurch gekennzeichnet, dass** die Turbine (10), der elektrische Antriebsmotor (14) und der Wechselrichter (18) im hinteren Teil des Luftfahrzeugs (11) angeordnet sind.

## Claims

1. Starting device for a gas turbine disposed in an aircraft, of the type having electrical power supply means (13) delivering DC current, and an electric drive motor (14) which, served by these supply means (13), is independent of the turbine (10) to be started, and whose output shaft (15) is able to be mechanically coupled rotationally to the input shaft (17) of this turbine (10), **characterised in that** the electric drive motor (14) is a synchronous motor supplied with three-phase alternating current and controlled by an inverter (18) connected to the supply means (13).

2. Starting device according to Claim 1, **characterised in that** the supply means (13) have, as a power source, at least one battery of accumulators (20) followed by a voltage converter (21).

3. Starting device according to Claim 2, **characterised in that** the voltage converter (21) is formed by a plurality of conversion modules (25) which, through their inputs (26), are connected in parallel and which, through their outputs (27), are connected in series.

4. Starting device according to Claim 3, **characterised in that** each of the conversion modules (25) uses a transformer (28) whose working frequency is between 25 kHz and 100 kHz.

5. Starting device according to Claim 4, **characterised in that** the transformer (28) of the conversion modules (25) is of the "planar" type.

6. Starting device according to any one of Claims 3 to 5, **characterised in that** each of the conversion modules (25) uses power switches of the MOSFET type.

7. Starting device according to any one of Claims 3 to 6, **characterised in that** the conversion modules (25) are divided into groups, and there is one battery of accumulators (20) per group.

8. Starting device according to any one of Claims 2 to 6, **characterised in that**, starting with a low voltage (V1) below 80 V, the voltage converter (21) delivers a high voltage (V2) of between 400 V and 600 V.

9. Starting device according to any one of Claims 2 to 8, **characterised in that** an output filter (32) is associated with the voltage converter (21).

10. Starting device according to any one of Claims 2 to 8, **characterised in that** the voltage converter (21) is controlled by a current-sensitive control module (33).

11. Starting device according to Claims 4 and 10, taken conjointly, **characterised in that** the control module (33) is sensitive to the peak value of the current flowing in the secondary of the transformer (28) of a conversion module (25).

12. Starting device according to any one of Claims 2 to 10, **characterised in that** the battery or batteries of accumulators (20) and the corresponding voltage converter (21) are disposed in the front part of the aircraft (11).

13. Starting device according to any one of Claims 2 to 12, **characterised in that** the supply means (13) have, as a power source, in substitution for the batteries of accumulators (20), or conjointly with these, the on-board DC system.

14. Starting device according to Claim 1, **characterised in that** the supply means (13) have, as a power source, the on-board three-phase AC system (22), and this acts by means of a current converter (23).

15. Starting device according to Claims 9 and 14 taken conjointly, **characterised in that** the output filter (32) associated with the voltage converter (21) is also associated with the current converter (23).

16. Starting device according to either one of Claims 14 or 15, **characterised in that** the current converter (23) is disposed in the front part of the aircraft (11).

17. Starting device according to any one of Claims 1 to 16, **characterised in that** the inverter (18) is a three-phase high-voltage inverter.

18. Starting device according to Claim 17, **characterised in that** the inverter (18) has forced switching.

19. Starting device according to any one of Claims 1 to 18, **characterised in that** the inverter (18) delivers a power of around 20 kVA.

20. Starting device according to any one of Claims 1 to 19, **characterised in that** the inverter (18) uses power switches of the IGBT type.

21. Starting device according to any one of Claims 1 to 19, **characterised in that** the inverter (18) is controlled according to the technique of vector control.

22. Starting device according to any one of Claims 1 to 21, **characterised in that** it provides a control of the phase difference between the current supplied by the inverter (18) to the electric drive motor (14) and the electromotive force developed by the latter.

23. Starting device according to Claim 22, **characterised in that** the control of the phase difference between the current supplied by the inverter (18) to the electric drive motor (14) and the electromotive force developed by the latter is effected according to the operating point of the electric drive motor (14).

24. Starting device according to any one of Claims 1 to 23, **characterised in that** the inverter (18) is controlled according to the parameters recorded on the turbine (10).

25. Starting device according to any one of Claims 1 to 24, **characterised in that** the inverter (18) is controlled according to preprogrammed parameters.

26. Starting device according to any one of Claims 1 to 25, **characterised in that** the electric drive motor (14) is a synchronous motor with permanent magnet.

27. Starting device according to any one of Claims 1 to 26, **characterised in that** the turbine (10), the electric drive motor (14) and the inverter (18) are disposed at the rear part of the aircraft (11).
